# EUROPEAN PATENT APPLICATION

(11) **EP 4 715 181 A1**
(43) Date of publication of application: **25.03.2026**
(21) Application number: 25201000.4
(22) Date of filing: 09.09.2025
(51) Int. Cl.: F02C 7/00, F02C 7/055

(54) **SYSTEM FOR CONTROLLING VENTILATION AIR FLOW TO TURBINE ENCLOSURE**

(30) Priority: 20.09.2024 IN 202411071365
(71) Applicant: GE Vernova Technology GmbH, 5400 Baden (CH)
(72) Inventor: BHOSARKAR, Koustubh Dhanahjay, 560066 Bengaluru (IN); PRAKASH, Rajan, 560066 Bengaluru (IN); NARAYANAN, Balaji, Bengaluru, 560066 (US)
(74) Representative: Rüger Abel Patentanwälte PartGmbB

(57) **Abstract**

A system (150) for controlling ventilation to a turbine enclosure (92) includes an air inlet filter system (152), a ventilation fan (154) to extract an air flow (156) from the air inlet filter system (152), and an air delivery system (160) including a plurality of conduits (162). Each conduit (162) delivers the air flow (156) to one of a plurality of ventilation inlets (164) defined in the turbine enclosure (92). A motorized volume control damper (170) is operably coupled to each of the plurality of ventilation inlets (164) and is configured to control a volume of air flow (156) entering a respective ventilation inlet (164) through a respective conduit (162). A controller (180) is configured to control each motorized volume control damper (170) to evenly distribute the air flow (156) to each of the plurality of ventilation inlets (164) regardless of a pressure drop (ΔP) across the ventilation fan (154).

## Description

### TECHNICAL FIELD

The disclosure relates generally to turbine systems. More specifically, the disclosure relates to a system for controlling ventilation air flow to a turbine enclosure.

### BACKGROUND

Gas turbine systems are typically positioned within a gas turbine enclosure. A positive pressure ventilation system is used to maintain desired environmental conditions, such as temperature, pressure and hazardous gas levels, inside the turbine enclosure. The ventilation system includes an inlet filter system and a ventilation fan that delivers an air flow to different ventilation inlets in the turbine enclosure. The air flow exits the turbine enclosure through an air exhaust. Conduits couple the ventilation fan to the various ventilation inlets. The ventilation system and, in particular, the conduits and ventilation inlets are engineered to maintain the desired environmental conditions based on expected airflow through the inlet filter system. For example, the ventilation inlets at different locations and the conduits that deliver air flow thereto may have different physical characteristics, such as but not limited to cross-sectional area, set to ensure an even distribution of air flow to each of the ventilation inlets based on an expected airflow through the inlet filter system.

As the inlet filter system operates, it captures more debris, which may cause a pressure to unexpectedly decrease in the ventilation system and reduce the air flow to one or more ventilation inlets of the turbine enclosure. The reduced air flow to a particular ventilation inlet may cause the temperature, pressure, or hazardous material levels to be out of compliance with a desired range. Current approaches to address this situation include over-designing the ventilation system with increased number or size of ventilation inlets, a larger ventilation fan, and/or increased numbers of sensors for an alarm system that indicates when a particular operational environment parameter is out of compliance with desired conditions. However, such approaches add cost and complexity to the construction, operation, and maintenance of the gas turbine system.

### BRIEF DESCRIPTION

All aspects, examples and features mentioned below can be combined in any technically possible way.

An aspect of the disclosure provides a system for controlling ventilation to a turbine enclosure, the system comprising: an air inlet filter system; a ventilation fan operably coupled to the air inlet filter system to extract an air flow from the air inlet filter system; an air delivery system operably coupled to the ventilation fan, the air delivery system including a plurality of conduits, each conduit delivering the air flow to one of a plurality of ventilation inlets defined in the turbine enclosure; a motorized volume control damper operably coupled to each of the plurality of ventilation inlets and configured to control a volume of air flow entering a respective ventilation inlet through a respective conduit; and a controller configured to control each motorized volume control damper to evenly distribute the air flow to each of the plurality of ventilation inlets regardless of a pressure drop across the ventilation fan.

Another aspect of the disclosure includes any of the preceding aspects, and at least one of: at least one ventilation inlet of the plurality of ventilation inlets has a different cross-sectional area than other ventilation inlets of the plurality of ventilation inlets, and at least one conduit of the plurality of conduits has a different cross-sectional area than other conduits of the plurality of conduits.

Another aspect of the disclosure includes any of the preceding aspects, and further comprising: a first pressure sensor measuring a first pressure of the air flow between the air inlet filter system and the ventilation fan; a second pressure sensor measuring a second pressure of the air flow downstream of the ventilation fan; and a first temperature sensor measuring a first temperature of the air flow between the air inlet filter system and the ventilation fan, wherein the controller determines the pressure drop based on a difference between the first pressure and the second pressure and controls a percentage open position for each motorized volume control damper to evenly distribute the air flow to each of the plurality of ventilation inlets based on the pressure drop and a first temperature of the air flow upstream of the ventilation fan.

Another aspect of the disclosure includes any of the preceding aspects, and the controller determines the percentage open position for each motorized volume control damper to evenly distribute the air flow to each of the plurality of ventilation inlets based on an empirical correlation of the pressure drop and a first temperature of the air flow upstream of the ventilation fan to the percentage open position for each motorized volume control damper at each of the plurality of ventilation inlets

Another aspect of the disclosure includes any of the preceding aspects, and the empirical correlation is different for at least two of the plurality of ventilation inlets.

Another aspect of the disclosure includes any of the preceding aspects, and further comprising: a third pressure sensor measuring a third pressure of an air exhaust exiting the turbine enclosure; and a second temperature sensor measuring a second temperature of the air exhaust exiting the turbine enclosure, wherein the controller changes an overall ventilation flow based on at least one of the third pressure and the second temperature.

Another aspect of the disclosure includes a gas turbine (GT) system, the GT system comprising: a main unit in a turbine enclosure, the main unit comprising, in serial flow order, a compressor, at least one combustor, and an expansion turbine; a ventilation system for controlling ventilation to the turbine enclosure, the ventilation system including: an air inlet filter system; a ventilation fan operably coupled to the air inlet filter system to extract an air flow from the air inlet filter system; an air delivery system operably coupled to the ventilation fan, the air delivery system including a plurality of conduits, each conduit delivering the air flow to one of a plurality of ventilation inlets defined in the turbine enclosure; a motorized volume control damper operably coupled to each of the plurality of ventilation inlets and configured to control a volume of air flow entering a respective ventilation inlet through a respective conduit; and a controller configured to control each motorized volume control damper to evenly distribute the air flow to each of the plurality of ventilation inlets regardless of a pressure drop across the ventilation fan.

Another aspect of the disclosure includes any of the preceding aspects, and at least one of: at least one ventilation inlet of the plurality of ventilation inlets has a different cross-sectional area than other ventilation inlets of the plurality of ventilation inlets, and at least one conduit of the plurality of conduits has a different cross-sectional area than other conduits of the plurality of conduits.

Another aspect of the disclosure includes any of the preceding aspects, and further comprising: a first pressure sensor measuring a first pressure of the air flow between the air inlet filter system and the ventilation fan; a second pressure sensor measuring a second pressure of the air flow downstream of the ventilation fan; and a first temperature sensor measuring a first temperature of the air flow between the air inlet filter system and the ventilation fan, wherein the controller determines the pressure drop based on a difference between the first pressure and the second pressure and controls a percentage open position for each motorized volume control damper to evenly distribute the air flow to each of the plurality of ventilation inlets based on the pressure drop and a first temperature of the air flow upstream of the ventilation fan.

Another aspect of the disclosure includes any of the preceding aspects, and the controller determines the percentage open position for each motorized volume control damper to evenly distribute the air flow to each of the plurality of ventilation inlets based on an empirical correlation of the pressure drop and the first temperature to the percentage open position for each motorized volume control damper at each of the plurality of ventilation inlets.

Another aspect of the disclosure includes any of the preceding aspects, and the empirical correlation is different for at least two of the plurality of ventilation inlets.

Another aspect of the disclosure includes any of the preceding aspects, and further comprising: a third pressure sensor measuring a third pressure of an air exhaust exiting the turbine enclosure; and a second temperature sensor measuring a second temperature of the air exhaust exiting the turbine enclosure, wherein the controller changes an overall ventilation flow based on at least one of the third pressure and the second temperature.

Another aspect of the disclosure includes a method, comprising: operating a main unit of a gas turbine engine in a turbine enclosure, the main unit comprising, in serial flow order, a compressor, at least one combustor, and an expansion turbine; ventilating the turbine enclosure by extracting an air flow from an air inlet filter system using a ventilation fan and directing the air flow through an air delivery system operably coupled to the ventilation fan, wherein the air delivery system includes a plurality of conduits, each conduit delivering the air flow to one of a plurality of ventilation inlets defined in the turbine enclosure; and controlling a motorized volume control damper operably coupled to each of the plurality of ventilation inlets and configured to control a volume of air flow entering a respective ventilation inlet through a respective conduit to evenly distribute the air flow to each of the plurality of ventilation inlets regardless of a pressure drop across the ventilation fan.

Another aspect of the disclosure includes any of the preceding aspects, and at least one of: at least one ventilation inlet of the plurality of ventilation inlets has a different cross-sectional area than other ventilation inlets of the plurality of ventilation inlets, and at least one conduit of the plurality of conduits has a different cross-sectional area than other conduits of the plurality of conduits.

Another aspect of the disclosure includes any of the preceding aspects, and the controlling includes calculating the pressure drop based on a difference between a first pressure sensor measuring a first pressure of the air flow between the air inlet filter system and the ventilation fan and a second pressure sensor measuring a second pressure of the air flow downstream of the ventilation fan, and controlling a percentage open position for each motorized volume control damper to evenly distribute the air flow to each of the plurality of ventilation inlets based on the pressure drop and a first temperature of the air flow upstream of the ventilation fan.

Another aspect of the disclosure includes any of the preceding aspects, and the controlling the percentage open position for each motorized volume control damper to evenly distribute the air flow to each of the plurality of ventilation inlets is based on an empirical correlation of the pressure drop and the first temperature to the percentage open position for each motorized volume control damper at each of the plurality of ventilation inlets.

Another aspect of the disclosure includes any of the preceding aspects, and the empirical correlation is different for at least two of the plurality of ventilation inlets.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic block diagram of a system for controlling ventilation air flow to a turbine enclosure according to embodiments of the disclosure;
FIG. 2 shows a block diagram of an illustrative gas turbine system capable of use with a system according to embodiments of the disclosure;
FIG. 3 shows an illustrative look-up table of an empirical correlation for a particular ventilation inlet according to embodiments of the disclosure; and
FIG. 4 shows a flow diagram of a method according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a ventilation system for a turbine enclosure of a gas turbine system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbomachine or, for example, the flow of air through the combustor or coolant through one of the turbomachine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the turbomachine, and "aft" referring to the rearward or turbine end of the turbomachine.

It is often required to describe parts that are at different radial positions with regard to a center axis. The term "axial" refers to movement or position parallel to an axis, e.g., an axis of a turbomachine. The term "radial" refers to movement or position perpendicular to an axis, e.g., an axis of a turbomachine. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circumferential interior surface of a casing extending about an axis of a turbomachine. As indicated above, it will be appreciated that such terms may be applied in relation to the axis of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a system for controlling ventilation to a turbine enclosure, a gas turbine system including the same, and a related method. The system includes an air inlet filter system, a ventilation fan to generate an air flow through the air inlet filter system, and an air delivery system including a plurality of conduits. The conduits deliver the air flow to each of a plurality of ventilation inlets defined in the turbine enclosure. A motorized volume control damper is operably coupled to each of the plurality of ventilation inlets and is configured to control a volume of the air flow entering a respective ventilation inlet from a respective conduit. A controller is configured to control each motorized volume control damper to evenly distribute the air flow to each of the plurality of ventilation inlets regardless of a pressure drop across the ventilation fan. The system allows the ventilation system to adapt to an air inlet filter system that is not operating at full capacity and helps maintain the required environmental conditions, e.g., temperature, in desired areas and thus lowers the risk of damage to other components. The system also reduces the amount of engineering efforts required to design a ventilation system that addresses large variations in the air flow.

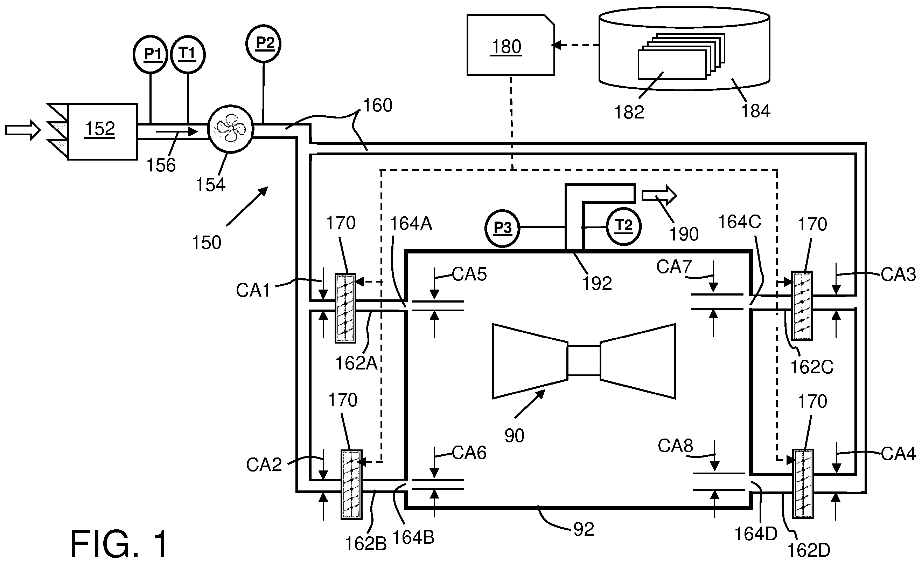

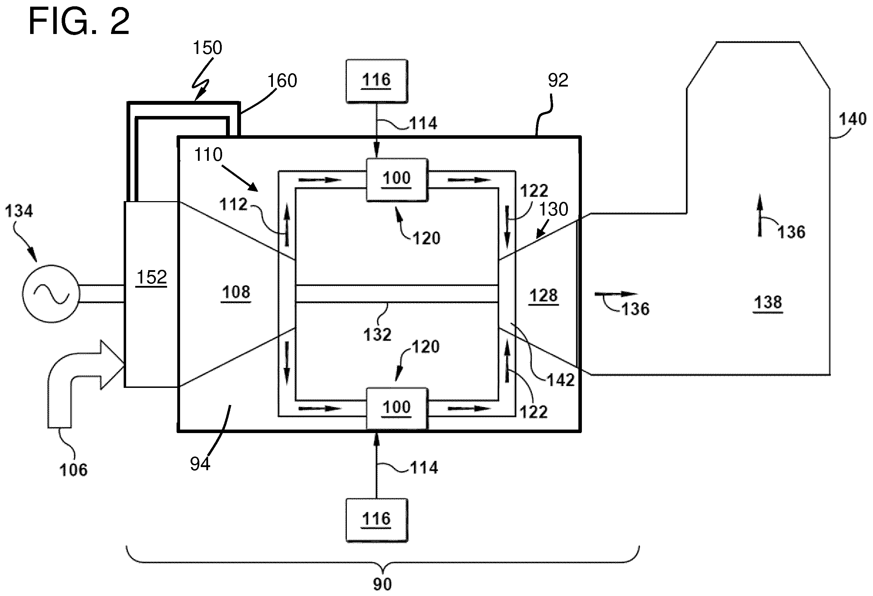

FIG. 1 shows a schematic block diagram of a gas turbine (GT) system 90 having a ventilation system 150 for controlling ventilation to a turbine enclosure 92 that encloses a main unit 94 of GT system 90. FIG. 2 shows a schematic block diagram of an illustrative GT system 90 that may use ventilation system 150 (hereafter "system 150" or "ventilation system 150") according to the present disclosure. As shown, GT system 90 generally includes an inlet section 152 that may include a series of filters, cooling coils, moisture separators, and/or other devices to purify and otherwise condition a working fluid (e.g., air) 106 to produce a primary air flow 146 entering main unit 94 of GT system 90.

The main unit 94 of GT system 90 includes, in serial flow order, a compressor 108 in a compressor section 110, at least one combustor 100 in a combustion section 120, and an expansion turbine 128 in a turbine section 130. Working fluid 106, e.g., primary air flow 146, flows through a main air conduit 158 (FIG. 1) to compressor 108 in compressor section 110 that progressively imparts kinetic energy to working fluid 106 to produce a compressed, high-pressure (HP) air or compressed air 112 at a highly energized state. HP air 112 is typically mixed with one or more fuels 114 from a fuel source 116 to form a combustible mixture within at least one combustor 100 in combustion section 120 that is operatively coupled to compressor section 110. The combustible mixture is burned to produce combustion gases 122 having a high temperature and pressure.

Combustion gases 122 flow through expansion turbine 128 of turbine section 130 operatively coupled to combustion section 120 to produce work. For example, turbine 128 may be connected to a shaft 132 so that rotation of turbine 128 drives compressor 108 to produce HP air 112. Alternately, or in addition, shaft 132 may connect turbine 128 to another load, such as a generator 134 for producing electricity. Exhaust gases 136 from turbine 128 flow through an exhaust section 138 that connects turbine 128 to an exhaust stack 140 downstream from turbine 128. Exhaust section 138 may include, for example, a heat recovery steam generator (not shown) for cleaning and extracting additional heat from exhaust gases 136 before their release to the environment. Where more than one combustor 100 is used, they may be circumferentially spaced around shaft 132 and collectively deliver combustion gases 122 to a turbine inlet 142 of turbine 128. It is emphasized that the parts of GT system 90 located within turbine enclosure 92 as shown in FIGS. 1 and 2 (e.g., main unit 94) are merely illustrative, and different parts of GT system 90 may be within or outside of turbine enclosure 92.

In one embodiment, GT system 90 may include any engine model such as those commercially available from GE Vernova of Cambridge, MA. The present disclosure is not limited to operability with any one particular GT system and may be implemented in connection with other engines including, for example, any HA, F, B, LM, GT, TM and E-class engine models of GE Vernova, and engine models of other companies. Furthermore, the present disclosure is not limited to implementation with any particular turbomachine, and may be applicable to, for example, steam turbines, jet engines, compressors, turbofans, etc.

Returning to FIG. 1, ventilation system 150 includes an air inlet filter system 152. Air inlet filter system 152 may include any now known or later developed system for filtering any form of debris or contaminants from environmental air. For example, air inlet filter system 152 (hereafter "filter system 152") may include a series of filters, cooling coils, moisture separators, and/or other devices to purify and otherwise condition. Filter system 152 may also include related filter cleaning systems, e.g., vibration systems, washing systems, etc. The primary air flow 146 to compressor 108 is conveyed through main air conduit 158 after being conditioned by filter system 152.

System 150 also includes a ventilation fan 154 operably coupled to filter system 152 to extract a secondary air flow 156 (e.g., of cleaned and/or otherwise conditioned air) from filter system 152. Ventilation fan 154 may include any now known or later developed industrial fan system capable of creating sufficient draw of air flow 156 from filter system 152 for conveyance through an air delivery system 160, as will be described herein. Although not shown, in some embodiments, the ventilation air intake portions of system 150 may include other elements, structures, systems, or devices such as one or more motorized air intake dampers, dehumidifiers/humidifiers, air cleaning systems, sensors and controls, to provide a desired air flow 156.

With continuing reference to FIGS. 1 and 2, system 150 also includes an air delivery system 160 operably coupled to ventilation fan 154. Air delivery system 160 includes a plurality of conduits 162. Conduits 162 may include any now known or later developed pipe, duct, channel, etc., capable of conveying air flow 156 to a plurality of ventilation inlets 164 defined in turbine enclosure 92. In this manner, each conduit 162 delivers part of air flow 156 to each of plurality of ventilation inlets 164 defined in turbine enclosure 92. For purposes of illustration, four conduits 162A-D are shown as part of air delivery system 160, each configured to deliver air flow 156 to a respective ventilation inlet 164A-D. It will be recognized, however, that turbine enclosure 92 may have any number of ventilation inlets 164, and air delivery system 160 may include any corresponding number of conduits 162.

Air delivery system 160 is engineered to evenly distribute air flow 156 to each of the plurality of ventilation inlets 164 under certain parameters. To this end, air delivery system 160 may have various conduits 162 and ventilation inlets 164 shaped and/or sized to allow the appropriate volume of air flow 156. For example, at least one of: at least one ventilation inlet, e.g., 164A, may have a different cross-sectional area (indicated by CA1-4 in FIG. 1) than other ventilation inlets, e.g., inlets 164B-D; and at least one conduit, e.g., 162A, may have a different cross-sectional area (indicated by CA5-8 in FIG. 1) than other conduits, e.g., 162B-D. Some of the cross-sectional areas can be the same, but all of them can be different also. The different cross-sectional areas initially provide the desired volume of air flow 156 to the different ventilation inlets 164A-D based on expected pressure drops and temperatures of system 150. In one non-limiting example, those conduits 162 and/or ventilation inlets 164 closer to ventilation fan 154 may have smaller cross-sectional areas due to the higher pressure existing at those locations.

As noted, as filter system 152 operates during operation of GT system 90, it captures more debris, which may cause a pressure to decrease in ventilation system 150 and reduce air flow 156 to one or more ventilation inlets 164 of turbine enclosure 92. The pressure drop may be such that the initially configured air delivery system does not evenly distribute air flow 156 to the desired ventilation outlets. The reduced air flow to a particular ventilation inlet may cause the temperature, pressure, or hazardous material levels within turbine enclosure 92 to be out of compliance with a desired range. To address this situation, system 150 includes a motorized volume control damper 170 operably coupled to each ventilation inlet 164 and configured to control a volume of air, i.e., air flow 156, entering a respective ventilation inlet 164 through a respective conduit 162. Motorized volume control dampers 170 (hereafter "dampers 170") are shown in conduits 162 and as larger than conduits 162 for illustration purposes, it will be recognized that dampers typically have the same cross-sectional area and/or shape as conduit 162 and/or ventilation inlet 164 to which they are coupled.

Dampers 170 may be physically in any location capable of controlling a volume of air flow 156 passing therethrough, e.g., in a conduit 162 and/or an opening (i.e., the actual ventilation inlet) in turbine enclosure 92. Dampers 170 may include any now known or later developed movable vane or vanes that can be set at different angles to provide a different level of openness to a respective conduit 162 or ventilation inlet 164. The different positions allow control of a volume of air flow 156 therethrough. In this manner, the volume of air flow 156 passing from each ventilation inlet 164 into turbine enclosure 92 can be adjusted outside of how ventilation inlet 164 and/or respective corresponding conduit 162 was/were originally engineered in order to address pressure drops in air flow 156 caused by clogging or other inefficiencies in filter system 152.

Dampers 170 can be set at any angular position to pass any volume of air flow 156 conveyed to a respective ventilation inlet 164 by a respective corresponding conduit 162. For example, dampers 170 may be positioned at 90° (mostly open), 85°, 80°, 75°, 70°, 65°, 60°, 55°, 50° (halfway open/closed), 45°, 40°, 35°, 30°, 25° or 20° (close to fully closed). Other angular positions are also possible. Each angular position provides a corresponding percentage open position, e.g., open 10%, 20%, 25%, 25.3%, etc., for each ventilation inlet 164. Precise control of damper 170 position can thus provide precise control of a volume of air flow 156 delivered to a respective ventilation inlet 164.

System 150 also includes a controller 180 configured to control each damper 170 to evenly distribute air flow 156 to each of ventilation inlets 164 regardless of a pressure drop across ventilation fan 154. To this end, system 150 may also include a first pressure sensor P1 measuring a first pressure of air flow 156 between filter system 152 and ventilation fan 154, and a second pressure sensor P2 measuring a second pressure of air flow 156 downstream of ventilation fan 154. Any pressure sensor described herein may include any now known or later developed appropriate pressure sensors for a gas. System 150 may also include a first temperature sensor T1 measuring a first temperature of air flow 156 between filter system 152 and ventilation fan 154. Any temperature sensor described herein may include any now known or later developed appropriate temperature sensors for a gas, e.g., thermometer, thermocouple, etc. Controller 180 can determine (calculate) a pressure drop (ΔP) using the first and second pressures measured by first and second pressure sensors P1, P2, i.e., ΔP = P2 pressure - P1 pressure. Controller 180 can include any now known or later developed industrial controller, e.g., such as those used to control GT system 90, and capable of carrying out the functions described herein. Although shown as a separate entity from GT system 90, the functioning of controller 180 can be incorporated in other control systems for parts of GT system 90.

As will be further described, for each ventilation inlet 164, a correlation of pressure drop ΔP across ventilation fan 154 and temperature (at temperature sensor T1 upstream of ventilation fan 154) to determine a damper's 170 angular position can be identified based on empirical data to adjust a volume of air flow 156 to the respective ventilation inlet 164 diminished by the pressure drop. An empirical correlation is formed for each ventilation inlet 164 based on its particular characteristics, such as but not limited to: corresponding conduit 162 and/or inlet 164 cross-sectional area, shape, size, location; typical back pressure experienced; and/or thermal load of equipment within turbine enclosure 92 adjacent the inlet. As noted, the empirical correlations can be used to control dampers 170 at each respective ventilation inlet 164 to address a pressure drop across ventilation fan 154 caused by clogging of filter system 152.

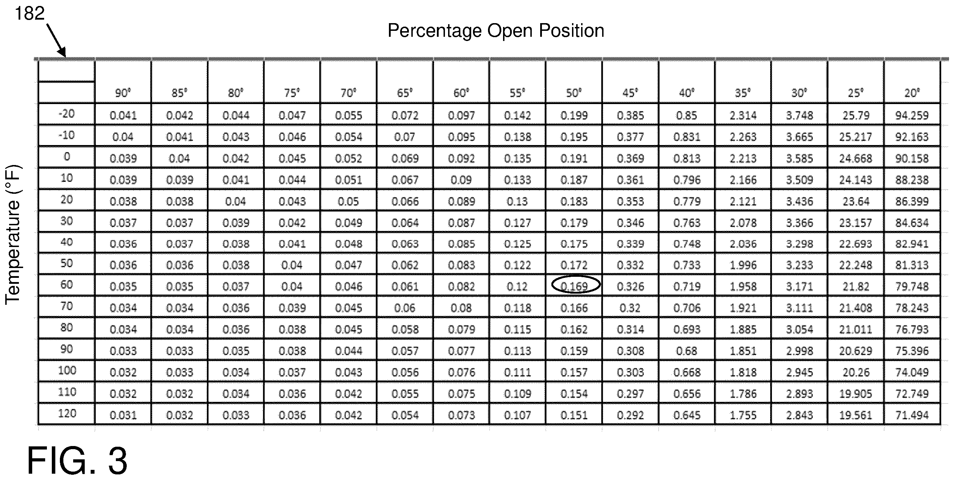

FIG. 3 shows an illustrative look-up table 182 of an empirical correlation for a particular ventilation inlet 164 according to embodiments of the disclosure. As shown in FIG. 1, each ventilation inlet 164 may have its own look-up table 182, which may be stored in a database 184 accessible by controller 180. More particularly, similar ventilation inlets 164 may share the same look-up table 182, but the empirical correlation is typically different for each inlet, and at least is different for at least two of ventilation inlets 164. It will be recognized that while the empirical correlation is described herein in terms of a look-up table 182, the correlation can be formatted in a wide variety of alternative arrangements. Further, the correlation may be alternatively presented in algorithmic form, where possible.

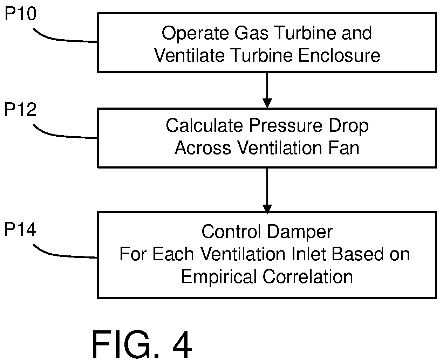

To further explain operation, FIG. 4 shows a flow diagram of a method according to embodiments of the disclosure. With reference to FIGS. 1-4, in process P10, gas turbine 128 and GT system 90 are operated in a normal fashion, and simultaneously, system 150 ventilates turbine enclosure 92. More particularly, as previously described, a combustible mixture is burned to produce combustion gases 122 having a high temperature and pressure, and combustion gases 122 flow through expansion turbine 128 to produce work. Main unit 94 (including compressor 108, combustor(s) 100, and expansion turbine 128) of GT system 90 operate in turbine enclosure 92. In addition, ventilation fan 154 draws air flow 156 through filter system 152 and delivers it under positive pressure to ventilation inlets 164 of turbine enclosure 92. More particularly, turbine enclosure 92 is ventilated by extracting air flow 156 from filter system 152 using ventilation fan 154. Air flow 156 is directed through/by an air delivery system 160 including conduits 162 operably coupled to ventilation fan 154. Each conduit 162 delivers part of air flow 156 to each of ventilation inlets 164 defined in turbine enclosure 92. Over time, filter system 152 filters debris and/or contaminants from the air and begins to cause a pressure drop across ventilation fan 154, e.g., due to clogging or other inefficiencies (e.g., icing, moisture, dirt/sand, etc.).

In process P12, controller 180 continually determines pressure drop ΔP based on a difference between the first pressure and the second pressure from pressure sensors P1, P2. More particularly, controller 180 determines the pressure drop ΔP based on a difference between a first pressure sensor P1 measuring a first pressure of air flow 156 between filter system 152 and ventilation fan 154 and a second pressure sensor P2 measuring a second pressure of air flow 156 downstream of ventilation fan 154.

In process P14, controller 180 also controls a percentage open position for each damper 170 to evenly distribute air flow 156 to each of ventilation inlets 164 based on pressure drop ΔP and a first temperature of air flow 156 upstream of ventilation fan 154. More particularly, controller 180 determines the percentage open position for each damper 170 to evenly distribute air flow 156 to each ventilation inlet 164 based on an empirical correlation of pressure drop ΔP and the first temperature to the percentage open position for each damper 170 at each of the ventilation inlets 164. As noted, the empirical correlation may be represented by a look-up table 182 (FIG. 3), which may be different for at least two of the plurality of ventilation inlets 164. For example, as shown by the circled cell in FIG. 3, for a temperature of 60°F and a pressure drop of 0.169, controller 180 would position the respective damper 170 at 50° to provide the desired volume of air flow 156. The different dampers 170 are collectively formulated to ensure even distribution of air flow 156 within turbine enclosure 92. Thus, controller 180 controls dampers 170 operably coupled to each of ventilation inlets 164 and is configured to control a volume of air flow 156 entering a respective ventilation inlet 164 through a respective conduit 162 to evenly distribute air flow 156 to each of ventilation inlets 164 regardless of a pressure drop ΔP across ventilation fan 154.

Referring to FIG. 1, in another embodiment, system 150 may also include a third pressure sensor P3 measuring a third pressure of an air exhaust 190 exiting turbine enclosure 92, i.e., from an exhaust outlet opening 192 in turbine enclosure. System 150 also includes a second temperature sensor T2 measuring a second temperature of air exhaust 190 exiting turbine enclosure 92. Controller 180 may change an overall ventilation flow based on the third pressure and/or the second temperature. For example, controller 180 may use these sensors to identify a need for increasing an overall ventilation flow through all ventilation inlets, e.g., based on a threshold such as flow rate or flow volume.

Embodiments of the disclosure also include GT system 90 including main unit 94 in turbine enclosure 92 and ventilation system 150 for controlling ventilation to the turbine enclosure, as described herein.

Embodiments of the disclosure provide various technical and commercial advantages, examples of which are discussed herein. The system allows the ventilation system to adapt to an inlet filter system that is not operating at full capacity and helps to maintain the required environmental conditions, e.g., temperature, in desired areas within turbine enclosure 92, thus lowering the risk of damage to other components. The system also reduces the amount of engineering efforts required to design a ventilation system that addresses large variations in air flow and environmental conditions in which the GT system may operate.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. **In** at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A system (150) for controlling ventilation to a turbine enclosure (92), the system (150) comprising:
an air inlet filter system (152);
a ventilation fan (154) operably coupled to the air inlet filter system (152) to extract an air flow from the air inlet filter system (152);
an air delivery system (160) operably coupled to the ventilation fan (154), the air delivery system (160) including a plurality of conduits (162), each conduit (162) delivering the air flow to one of a plurality of ventilation inlets (164) defined in the turbine enclosure (92);
a motorized volume control damper (170) operably coupled to each of the plurality of ventilation inlets (164) and configured to control a volume of air flow entering a respective ventilation inlet (164) through a respective conduit (162); and
a controller (180) configured to control each motorized volume control damper (170) to evenly distribute the air flow to each of the plurality of ventilation inlets (164) regardless of a pressure drop across the ventilation fan (154).

2. The system (150) of claim 1, wherein at least one of: at least one ventilation inlet (164A) of the plurality of ventilation inlets (164) has a different cross-sectional area than other ventilation inlets (164B-D) of the plurality of ventilation inlets (164), and at least one conduit (162A) of the plurality of conduits (162) has a different cross-sectional area than other conduits (162B-D) of the plurality of conduits (162).

3. The system (150) of claim 1 or 2, further comprising:
a first pressure sensor (P1) measuring a first pressure of the air flow (156) between the air inlet filter system (152) and the ventilation fan (154);
a second pressure sensor (P2) measuring a second pressure of the air flow (156) downstream of the ventilation fan (154); and
a first temperature sensor (T1) measuring a first temperature of the air flow (156) between the air inlet filter system (152) and the ventilation fan (154),
wherein the controller (180) determines the pressure drop (ΔP) based on a difference between the first pressure and the second pressure and controls a percentage open position for each motorized volume control damper (170) to evenly distribute the air flow (156) to each of the plurality of ventilation inlets (164) based on the pressure drop (ΔP) and the first temperature.

4. The system (150) of claim 3, wherein the controller (180) determines the percentage open position for each motorized volume control damper (170) to evenly distribute the air flow (156) to each of the plurality of ventilation inlets (164) based on an empirical correlation of the pressure drop (ΔP) and the first temperature to the percentage open position for each motorized volume control damper (170) at each of the plurality of ventilation inlets (164).

5. The system (150) of claim 4, wherein the empirical correlation is different for at least two of the plurality of ventilation inlets (164).

6. The system (150) of claim 4, further comprising:
a third pressure sensor (P3) measuring a third pressure of an air exhaust (190) exiting the turbine enclosure (92); and
a second temperature sensor (T2) measuring a second temperature of the air exhaust (190) exiting the turbine enclosure (92),
wherein the controller (180) changes an overall ventilation flow based on at least one of the third pressure and the second temperature.

7. A gas turbine (GT) system (90), the GT system (90) comprising:
a main unit (94) in a turbine enclosure (92), the main unit (94) comprising, in serial flow order, a compressor (108), at least one combustor (100), and an expansion turbine (128);
a ventilation system (150) for controlling ventilation to the turbine enclosure (92), the ventilation system (150) being defined according to any of claims 1 to 6.

8. A method for controlling ventilation to a turbine enclosure (92), the method comprising:
operating a main unit (94) of a gas turbine engine (90) in the turbine enclosure (92), the main unit (94) comprising, in serial flow order, a compressor (108), at least one combustor (100), and an expansion turbine (128);
ventilating the turbine enclosure (92) by extracting an air flow (156) from an air inlet filter system (152) using a ventilation fan (154) and directing the air flow (156) through an air delivery system (160) operably coupled to the ventilation fan (154), wherein the air delivery system (160) includes a plurality of conduits (162), each conduit (162) delivering the air flow (156) to one of a plurality of ventilation inlets (164) defined in the turbine enclosure (92); and
controlling a motorized volume control damper (170) operably coupled to each of the plurality of ventilation inlets (164) and configured to control a volume of air flow (156) entering a respective ventilation inlet (164) through a respective conduit (162) to evenly distribute the air flow (156) to each of the plurality of ventilation inlets (164) regardless of a pressure drop (ΔP) across the ventilation fan (154).

9. The method of claim 8, wherein at least one of: at least one ventilation inlet (164A) of the plurality of ventilation inlets (164) has a different cross-sectional area than other ventilation inlets (164B-D) of the plurality of ventilation inlets (164), and at least one conduit (162A) of the plurality of conduits (162) has a different cross-sectional area than other conduits (162B-D) of the plurality of conduits (162).

10. The method of claim 8, wherein the controlling includes calculating the pressure drop (ΔP) based on a difference between a first pressure sensor (P1) measuring a first pressure of the air flow between the air inlet filter system (152) and the ventilation fan (154) and a second pressure sensor (P2) measuring a second pressure of the air flow downstream of the ventilation fan (154), and controlling a percentage open position for each motorized volume control damper (170) to evenly distribute the air flow (156) to each of the plurality of ventilation inlets (164) based on the pressure drop (ΔP) and a first temperature of the air flow (156) upstream of the ventilation fan (154).

11. The method of claim 10, wherein the controlling the percentage open position for each motorized volume control damper (170) to evenly distribute the air flow (156) to each of the plurality of ventilation inlets (164) is based on an empirical correlation of the pressure drop (ΔP) and the first temperature to the percentage open position for each motorized volume control damper (170) at each of the plurality of ventilation inlets (164).

12. The method of claim 11, wherein the empirical correlation is different for at least two of the plurality of ventilation inlets (164).
